# EUROPÄISCHE PATENTSCHRIFT

(11) **EP 1 425 616 B1**
(45) Veröffentlichungstag und Bekanntmachung des Hinweises auf die Patenterteilung: **29.06.2005**
(21) Anmeldenummer: 01978154.1
(22) Anmeldetag: 14.09.2001
(51) Int. Cl.: G02B 6/12, G02B 6/28, G02B 6/293, G02F 1/225, G02F 1/313, H04J 14/02, H04Q 11/02

(54) **OPTISCHE ANORDNUNG UND SENDE-/EMPFANGSMODUL FÜR BIDIREKTIONALE OPTISCHE WDM-SYSTEME UND OPTISCHE DATENÜBERTAGUNGEN**
OPTICAL ARRANGEMENT AND TRANSCEIVER MODULE FOR BI-DIRECTIONAL OPTICAL WDM SYSTEMS AND OPTICAL DATA TRANSMISSIONS
DISPOSITIF OPTIQUE ET MODULE EMETTEUR/RECEPTEUR DESTINE A DES SYSTEMES WDM OPTIQUES BIDIRECTIONNELS ET A DES TRANSMISSIONS DE DONNEES OPTIQUES

(43) Veröffentlichungstag der Anmeldung: 09.06.2004
(73) Patentinhaber: Infineon Technologies AG, 81669 München (DE)
(72) Erfinder: BAUMANN, Ingo, 85604 Zorneding (DE); GAO, Zhan, 81739 München (DE)
(74) Vertreter: Müller, Wolfram Hubertus, Dr. Dipl.-Phys.
(86) Internationale Anmeldenummer: PCT/DE2001/003602
(87) Internationale Veröffentlichungsnummer: WO 2003/027735

(56) Entgegenhaltungen:
- EP-A- 0 607 029
- US-A- 5 363 456
- US-A- 5 978 129
- PATENT ABSTRACTS OF JAPAN vol. 1997, no. 08, 29. August 1997 (1997-08-29) & JP 09 090440 A (NEC CORP), 4. April 1997 (1997-04-04)
- PATENT ABSTRACTS OF JAPAN vol. 015, no. 446 (P-1274), 13. November 1991 (1991-11-13) & JP 03 186808 A (HITACHI CABLE LTD), 14. August 1991 (1991-08-14)
- PATENT ABSTRACTS OF JAPAN vol. 1997, no. 04, 30. April 1997 (1997-04-30) & JP 08 334639 A (HITACHI CABLE LTD), 17. Dezember 1996 (1996-12-17)
- PATENT ABSTRACTS OF JAPAN vol. 1998, no. 01, 30. Januar 1998 (1998-01-30) & JP 09 243842 A (SUMITOMO ELECTRIC IND LTD), 19. September 1997 (1997-09-19)
- PATENT ABSTRACTS OF JAPAN vol. 018, no. 223 (P-1729), 21. April 1994 (1994-04-21) & JP 06 018735 A (HITACHI CABLE LTD), 28. Januar 1994 (1994-01-28)

## Beschreibung

Die Erfindung betrifft eine optische Anordnung, insbesondere für bidirektionale WDM-Systeme mit mindestens drei Wellenlängen gemäß dem Oberbegriff des Anspruchs 1 und ein Sende-/Empfangsmodul für eine bidirektionale optische Datenübertragung mit einer derartigen optischen Anordnung.

Es ist in der optischen Nachrichtentechnik bekannt, zur Übertragung einer möglichst großen Datenmenge über einen Lichtwellenleiter die zu übertragenden Daten zu multiplexen. Eine Möglichkeit hierzu besteht darin, mit mehreren Wellenlängen unabhängig und gleichzeitig über einen Wellenleiter Informationen zu übertragen. Insbesondere sind sogenannte WDM-Systeme (Wavelength Division Multiplex) bekannt, bei denen Informationen parallel auf mehreren Datenkanälen unterschiedlicher Wellenlänge in einer Faser übertragen werden. Dabei ist es notwendig, auf der Sendeseite die Signale verschiedener Lichtquellen in einen Lichtwellenleiter zu vereinigen und auf der Empfängerseite die Signale verschiedener Wellenlängen aus dem ankommenden Wellenleiter in einzelne Kanäle zur getrennten Detektion aufzuteilen. Wenn auf einer Lichtfaser Signale in beiden Richtungen übertragen werden, liegt eine bidirektionale Datenübertragung vor. Diese Technik kann durch bidirektionale Module realisiert werden.

Es sind bidirektionale Module für Zweiwellenlängen- und Dreiwellenlängen-WDM-Applikationen bekannt. Die Module für Zweiwellenlängen-WDM-Applikationen besitzen entweder einen Mach-Zehnder-Interferometer, einen Richtkoppler oder einen dielektrischen Filter für die Trennung von zwei empfangenen Wellenlängen. Die Module für Dreiwellenlängen-WDM-Applikationen besitzen in der Regel eine Hybridaufbau aus Glasfasern, Mikrospiegeln und dielektrischen Filtern, um die drei Wellenlängen zu separieren.

Die JP 09 090440 A1 beschreibt ein Mach-Zehnder-Interferometer mit zwei Armen, in die jeweils über einen Richtkoppler ein Steuerlicht eingekoppelt wird. Dies dient einer Änderung des Brechungsindex der Wellenleiter. Die beiden Arme des Mach-Zehnder-Interferometers bilden jeweils einen der Arme der Richtkoppler aus.

Aus P.J. Williams et al.: "WDM-Transceiver OEICs for local access networks", ELECTRONICS LETTERS Vol. 30, No. 18, Seiten 1529-1530, 1994 ist ein gattungsgemäßes Sende-/Empfangsmodul bekannt, bei dem zur Trennung zweier eingehender Wellenlängen ein Mach-Zehnder-Interferometer verwendet wird. Gleichzeitig ist ein Laser vorgesehen, dessen Licht in entgegengesetzter Richtung den einen Arm des Mach-Zehnder-Interferometers durchläuft. Zwischen dem Mach-Zehnder-Interferometer und dem Laser ist ein 3dB-Koppler angeordnet.

Der vorliegenden Erfindung liegt die Aufgabe zugrunde, ein Sende-/Empfangsmodul für eine bidirektionale optische Datenübertragung mit zwei empfangenen und einer ausgesandten Wellenlänge zur Verfügung zu stellen, die einfach und mit einem hohem Integrationsgrad ausgebildet ist.

Diese Aufgabe wird erfindungsgemäß durch ein Sende-/ Empfangsmodul mit den Merkmalen des Anspruchs 1 gelöst. Bevorzugte und vorteilhafte Ausgestaltungen der Erfindung sind in den Unteransprüchen angegeben.

Danach ist vorgesehen, bei einem Sende-/Empfangsmodul mit einem Mach-Zehnder-Interferometer und einem Richtkoppler diese derart miteinander zu verschachteln, dass ein Arm des Mach-Zehnder-Interferometers gleichzeitig einer der Arme des Richtkopplers ist bzw. umgekehrt. Auf diese Weise wird der Platzbedarf minimiert und der Integrationsgrad erhöht. Das Mach-Zehnder-Interferometer und der Richtkoppler sind dabei bevorzugt auf einem Chip integriert.

Das Mach-Zehnder-Interferometer ist derart ausgebildet, dass die Eingangssignale einer ersten und einer zweiten getrennt zu detektierenden Wellenlänge durch den Eingangskoppler des Mach-Zehnder-Interferometers zu gleichen Teilen auf die beiden Arme des Mach-Zehnder-Interferometers aufgeteilt werden. Das Mach-Zehnder-Interferometer trennt die Signale der ersten Wellenlänge und die Signale der zweiten Wellenlänge. Sie werden dann am Ausgangskoppler des Mach-Zehnder-Interferometers auf getrennte optische Pfade gegeben, wobei die Detektionseinrichtungen jeweils an einem dieser optischen Pfade angeordnet sind. Der optische Sender koppelt Signale einer dritten Wellenlänge in den Arm des Richtkopplers ein, der nicht gleichzeitig ein Arm des Mach-Zehnder-Interferometer ist. Diese Signale werden im Richtkoppler in den gemeinsamen Arm mit dem Mach-Zehnder-Interferometer eingekoppelt und über den Eingangskoppler dem Ein-/Ausgangswellenleiter zugeführt.

Es wird ein Modul mit einem hohem Integrationsgrad bereitgestellt, daß mindestens drei Wellenlängen separieren kann (zwei eingehende und eine ausgehende).

Es wird darauf hingewiesen, dass gemäß der vorliegenden Erfindung auch ein Sende-/Empfangsmodul vorgesehen sein kann, die mehrere Mach-Zehnder-Interferometer und mehrere Richtkoppler enthält, wobei jeweils ein Mach-Zehnder-Interferometer und ein Richtkoppler in der erfindungsgemäßen Weise miteinander verschachtelt sind. Es kann somit beispielsweise eine Kaskadierung oder eine andere Kombination erfindungsgemäß verschachtelter Mach-Zehnder-Interferometer und Richtkoppler erfolgen. Die genaue Ausführung hängt dabei von der zu realisierenden optischen Schaltung ab.

Der eine Arm des Mach-Zehnder-Interferometers weist bevorzugt eine geringere Länge auf als der andere Arm. Dabei bildet der Arm geringerer Länge des Mach-Zehnder-Interferometers den einen Arm des Richtkopplers aus. Insbesondere verläuft der Arm des Richtkopplers, der gleichzeitig ein Arm des Mach-Zehnder-Interferometers ist, geradlinig, so daß eine einfache Ausbildung des Richtkopplers erfolgen kann.

In einer Weiterbildung der Erfindung ist auf einen Arm des Mach-Zehnder-Interferometers ein Phasenschieber gelegt. Dies ermöglich es, die Phasendifferenz zwischen den in den beiden Armen des Mach-Zehnder-Interferometers verlaufenden Signale genau einzustellen. Insbesondere können Technologieschwankungen ausgeglichen werden.

Die optische Anordnung von Mach-Zehnder-Interferometer und Richtkoppler ist bevorzugt integriert optisch ausgebildet. Insbesondere sind die Lichtwellenleiter und optischen Arme des Mach-Zehnder-Interferometers und des Richtkopplers integriert optisch ausgebildet. Grundsätzlich können jedoch auch faseroptische Strukturen verwendet werden.

In einer bevorzugten Weiterbildung ist dem Richtkoppler ein weiterer Richtkoppler zugeordnet, dessen einer Arm mit dem Richtkoppler und dessen anderer Arm mit dem optischen Sender verbunden ist, wobei
a) vom optischen Sender ausgesandte Strahlung in den mit dem Richtkoppler verbundenen Arm des weiteren Richtkopplers eingekoppelt wird und
b) in dem mit dem Richtkoppler verbundenen Arm vorhandene Strahlung, die vom Mach-Zehnder-Interferometer eingekoppelt ist, nicht in den mit dem optischen Sender verbundenen Arm des weiteren Richtkopplers eingekoppelt wird.

Hierdurch wird gewährleistet, daß aus dem Interferometer in den Richtkoppler eingekoppelte Störstrahlung nicht auf den optischen Sender geleitet wird und diesen dadurch stört.

Die Erfindung wird nachfolgend unter Bezugnahme auf die Figuren der Zeichnung anhand mehrerer Ausführungsbeispiele näher erläutert. Es zeigen:
- Figur 1: ein erstes Ausführungsbeispiel eines Sende-/ Empfangsmoduls mit einem Mach-Zehnder-Interferometer und zwei Richtkopplern;
- Figur 2: ein zweites Ausführungsbeispiel eines Sende-/ Empfangsmoduls mit einem Mach-Zehnder-Interferometer und zwei Richtkopplern und
- Figur 3: die Filtercharakteristik des Sende-/Empfangsmoduls der Figuren 1 und 2.

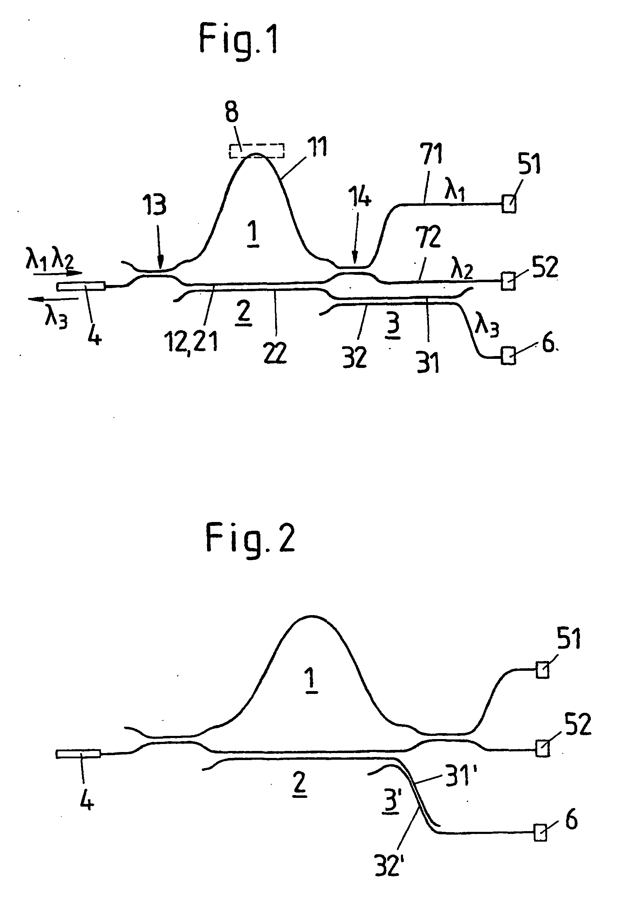

Figur 1 zeigt ein Sende-/Empfangsmodul für eine bidirektionale optische Datenübertragung mit einer optischen Anordnung, die aus einem Mach-Zehnder-Interferometer 1 und zwei Richtkopplern 2, 3 besteht. Das Modul ermöglicht ein Trennen bzw. Vereinigen von Signalen unterschiedlicher Wellenlängen, die in einem Lichtwellenleiter übertragen werden.

So weist das Sende-/Empfangsmodul einen Ein-/Ausgangswellenleiter 4 auf, bei dem es sich bevorzugt um eine Glasfaser handelt, über die in Eingangs- bzw. Empfangsrichtung Signale einer ersten Wellenlänge λ1 und einer zweiten Wellenlänge λ2 und in Ausgangs- bzw. Senderichtung Signale einer dritten Wellenlänge λ3 übertragen werden. Die Signale der Wellenlängen λ1, λ2 werden in weiter unten erläuterter Weise durch das Mach-Zehnder-Interferometer 1 separiert und von zwei Detektionseinrichtungen 51, 52, bei denen es sich bevorzugt um Fotodioden handelt, detektiert. Signale der Wellenlänge λ3 werden von einer Laserdiode 6 über die beiden Richtkoppler 3, 2 an den Ein-/Ausgangswellenleiter 4 übertragen.

Im dargestellten Ausführungsbeispiel liegt die Wellenlänge λ1 bei 1550 nm, die Wellenlänge λ2 bei 1490 nm und die Wellenlänge λ3 der Laserdiode bei 1310 nm. Grundsätzlich können jedoch auch andere Wellenlängen für die bidirektionale Datenübertragung verwendet werden.

Der Richtkoppler 1 weist einen oberen Arm 11 und einen unteren Arm 12 auf, die eine Längendifferenz ΔL aufweisen. Der obere Arm 11 besitzt dabei eine größere Länge als der untere Arm 12. Der untere Arm 12 des Mach-Zehnder-Interferometers 1 bildet gleichzeitig den einen Arm 21 des Richtkopplers 2, der aus zwei parallel verlaufenden Armen 21, 22 besteht, die längs einer definierten Strecke eng benachbart sind, so dass ein Energieaustausch zwischen den beiden Armen 21, 22 erfolgen kann.

Es ist somit eine hochintegrierte verschachtelte Anordnung eines Mach-Zehnder-Interferometers 1 und eines Richtkopplers 2 vorgesehen, bei der der eine Arm 12 des Mach-Zehnder-Interferometers gleichzeitig einen der Arme 21 eines Richtkopplers ausbildet.

Der untere Arm 22 des Richtkopplers 2 ist über den weiteren Richtkoppler 3 mit der Laserdiode 6 gekoppelt. Der Richtkoppler 3 weist einen oberen Arm 31 und einen unteren Arm 32 auf, die wiederum über eine definierte Strecke eng benachbart geführt sind.

Laserlicht der Wellenlänge λ3 wird von der Laserdiode in einen angrenzenden Wellenleiter eingekoppelt, der in den unteren Arm 32 des weiteren Richtkopplers 3 übergeht. Das Laserlicht wird dann in dem Richtkoppler 3 in den oberen Arm 31 eingekoppelt, der mit dem unteren Arm 22 des Richtkopplers 2 verbunden ist.

Das Mach-Zehnder-Interferometer 1 arbeitet als Wellenlängentrenner. An seinem Eingang 13 liegt ein 3-dB-Koppler, dessen einer Arm mit dem Ein-/Ausgangswellenleiter 4 verbunden ist. Der 3-dB-Koppler 13 teilt das aus den Wellenlängen λ1, λ2 bestehende Eingangssignal zu gleichen Teilen auf die beiden Arme 11, 12 des Mach-Zehnder-Interferometers 1 auf. In dem unteren Arm 12 eilt das Signal dabei um die Phase π/2 dem Signal in dem oberen Arm 11 voraus.

Optional ist auf den oberen Arm 11 des Mach-Zehnder-Interferometers 1 ein Phasenschieber 8 gelegt. Dieser ermöglich, die Phasendifferenz zwischen den in den beiden Armen 11, 12 des Mach-Zehnder-Interferometers verlaufenden Signale genau einzustellen. Es kann auf den Phasenschieber jedoch auch verzichtet werden, was durch die gestrichelte Darstellung angedeutet wird.

Am Ausgang 14 des Mach-Zehnder-Interferometers 1 werden die beiden Arme eng benachbart zueinander geführt, so dass ein Energieaustausch zwischen den beiden Armen erfolgen kann. Die beiden Arme 11, 12 gehen dabei in getrennte optische Pfade 71, 72 über, deren Signale durch die Detektionseinheiten 51 bzw. 52 detektiert werden.

Dabei erfolgt am Ausgang 14 des Mach-Zehnder-Interferometers 1 eine Wellenlängentrennung der beiden Wellenlängen λ1, λ2 dahingehend, dass die eine Wellenlänge λ1 vollständig in den oberen Pfad 71 eingekoppelt und die andere Wellenlänge λ2 vollständig in den unteren optischen Pfad 72 eingekoppelt wird. Dies hängt damit zusammen, dass am Ausgangsknoten 14 die phasenverschobenen Signale der beiden Arme 11, 12 derart miteinander wechselwirken, dass die in der Phase vorauseilende Wellenlänge bzw. die in der Phase nachhinkende Wellenlänge jeweils in den anderen Pfad eingekoppelt wird. Dabei ist das Mach-Zehnder-Interferometer derart ausgelegt, dass die Längendifferenz ΔL für die obere Wellenlänge, im betrachteten Ausführungsbeispiel also für die Wellenlänge von 1550 nm, 2π beträgt. Der im unteren Arm 12 verlaufende Signalanteil der Wellenlänge λ1 eilt in der Phase dem Signalanteil der Wellenlänge λ1 in dem oberen Arm 11 voraus und wird an dem Ausgangsknoten 14 vollständig in den oberen Arm bzw. den oberen optischen Pfad 71 eingekoppelt. In entsprechender Weise wird das Signal der Wellenlänge λ2 (im vorliegenden Ausführungsbeispiel 1490 nm) am Ausgang 14 von dem oberen Arm 11 in den unteren Arm 12 bzw. den unteren optischen Pfad 72 eingekoppelt.

Gleichzeitig zu der Trennung der beiden Wellenlängen λ1, λ2 durch das Mach-Zehnder-Interferometer 1 erfolgt eine Einkopplung des Lichtes der Wellenlänge λ3 in den Ein-/ Ausgangswellenleiter 4. Wie bereits erläutert, wird das Licht der Wellenlänge λ3 über den weiteren Richtkoppler 3 dem unteren Arm 22 des Richtkopplers 2 zugeführt. In dem Richtkoppler 2 wird das Signal der Wellenlänge Ä3 vollständig in den oberen Arm 21 des Richtkopplers 2 eingekoppelt, der gleichzeitig der untere Arm des Mach-Zehnder-Interferometers 1 ist. Das Signal der Wellenlänge λ3 wird dann über den 3-dB-Koppler 13 dem Ein-/Ausgangswellenleiter 4 zugeführt.

Der zweite Richtkoppler 3 erfüllt die Aufgabe, in den Richtkoppler 2 eingekoppeltes Licht der Wellenlängen λ1 und λ2 in einen toten Arm 31 des weiteren Richtkopplers zu leiten und auf diese Weise von der Laserdiode 6 fernzuhalten. So wird in den Richtkoppler 2 aufgrund des gemeinsamen Arm mit dem Mach-Zehnder-Interferometer, ohne das dies erwünscht wäre, ein kleiner Anteil des Lichtes der Wellenlängen λ1, λ2 eingekoppelt. Durch den weiteren Richtkoppler 3 wird dieses Licht von der Laserdiode 6 ferngehalten, um die Laserdiode zu schützen.

Grundsätzlich kann die beschriebene Anordnung jedoch auch ohne einen zweiten Richtkoppler 3 realisiert werden. Dies ist insbesondere dann der Fall, wenn die Laserdiode 6 robust aufgebaut und durch den geringen Anteil empfangenen Lichts der Wellenlängen λ1, λ2 in ihrem Betrieb nicht gestört wird.

Das Ausführungsbeispiel der Figur 1 beschreibt somit ein Sende-/Empfangsmodul, mit dem drei Wellenlängen λ1, λ2, λ3 voneinander getrennt werden können. Die Wellenlängen λ1, λ2, die von einem Ein-/Ausgangslichwellenleiter in das Modul eingekoppelt werden, werden dabei getrennt und von zwei gesonderten Detektionseinheiten 51, 52 empfangen. Über die Laserdiode 6 wird ein Signal der Wellenlänge λ3 in den Ein-/ Ausgangswellenleiter 4 eingekoppelt.

Das Ausführungsbeispiel der Figur 2 unterscheidet sich insofern von dem Ausführungsbeispiel der Figur 1, als die beiden Arme 31', 32' des zweiten Richtkopplers 3' nicht wie in Figur 1 geradlinig parallel verlaufen, sondern statt dessen gekrümmt parallel verlaufen. Hierdurch läßt sich die Gesamtgröße der Struktur bzw. der Moduls weiter verkleinern.

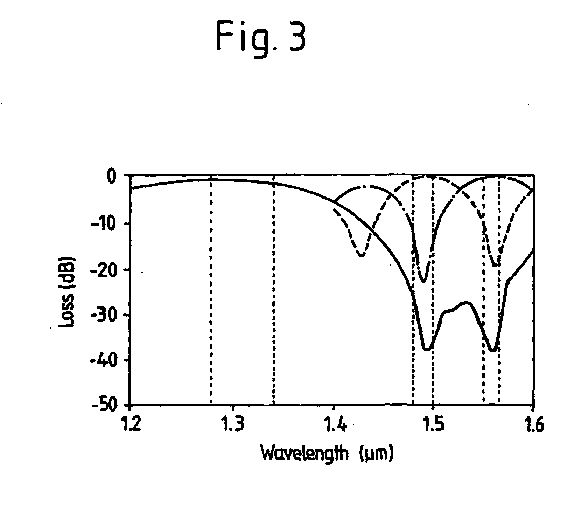

Figur 3 zeigt die Filtercharakteristik des Sende-/Empfangsmoduls der Figuren 1 und 2, wobei auf der Abszisse die Wellenlänge λ und auf der Ordinate die Abschwächung aufgetragen ist, wie sie an den beiden Fotodioden 51, 52 bzw. dem Ein-/Ausgangswellenleiter 4 (für die Wellenlänge λ3) vorliegt. Die strich-punktierte Linie gibt dabei die Abschwächung an dem einen Photodetektor 51, die gestrichelte Linie die Leistung an dem anderen Photodetektor 52 und die durchgezogene Linie die Schwächung am Ein-/Ausgangswellenleiter 4 an.

Es ist zu erkennen, dass an dem Empfänger 51 für die Wellenlänge λ1 (1550 nm) fast keine Schwächung vorliegt. Gleiches gilt für die Wellenlänge λ2 (1490 nm) bei der Fotodiode 52 und für die Wellenlänge λ3 (1310 nm) bei dem Ein-/Ausgangswellenleiter 4. Die optische Isolation zwischen 1310 nm und 1490 nm sowie zwischen 1310 nm und 1550 nm ist dabei größer als 30 dB und die Isolation zwischen 1490 nm und 1550 nm liegt bei ca. 20 dB. Es erfolgt somit eine sehr hochwertige Trennung der einzelnen Wellenlängen.

Die Erfindung schränkt sich in ihrer Ausführung nicht auf die vorstehend dargestellten Ausführungsbeispiele. Wesentlich für die Erfindung ist allein, dass bei einer optischen Anordnung mit einem Mach-Zehnder-Interferometer und einem Richtkoppler diese derart miteinander verschränkt sind, dass der eine Arm des Mach-Zehnder-Interferometers gleichzeitig einen der Arme des Richtkopplers darstellt bzw. umgekehrt.

## Patentansprüche

1. Sende-/Empfangsmodul für eine bidirektionale optische Datenübertragung für WDM-Systeme mit mindestens drei Wellenlängen, mit
- mindestens zwei Detektionseinrichtungen (51, 52),
- mindestens einer Sendeeinrichtung (6),
- einem Ein-/Ausgangswellenleiter (4), über den Signale mindestens zweier Wellenlängen zu dem Sende-/Empfangsmodul übertragen und Signale mindestens einer Wellenlänge von dem Sende-/Empfangsmodul ausgesandt werden, und
- mit mindestens einer optischen Anordnung, die aufweist
o ein Mach-Zehnder-Interferometer (1) mit einem ersten Arm (11), einem zweiten Arm (2), einem Eingangskoppler (13) und einem Ausgangskoppler (14), und
o einen Richtkoppler (2) mit einem ersten Arm (21) und einem zweiten Arm (22), wobei
- der Ein-/ Ausgangswellenleiter (4) mit dem Eingangskoppler (13) des Mach-Zehnder-Interferometers (1) verbunden ist, wobei am Eingangskoppler (13) die Eingangssignale einer ersten und einer zweiten getrennt zu detektierenden Wellenlänge (λ1, λ2) anliegen und der Eingangskoppler (13) die Eingangssignale zu gleichen Teilen auf die beiden Arme des Mach-Zehnder-Interferometers (1) aufteilt,
- das Mach-Zehnder-Interferometer (1) die Signale der ersten Wellenlänge (λ1) und die Signale der zweiten Wellenlänge (λ2) trennt, der Ausgangskoppler (14) die Signale der ersten Wellenlänge (λ1) und die Signale der zweiten Wellenlänge (λ2) auf getrennte optische Pfade (71, 72) gibt und die Detektionseinrichtungen (51, 52) jeweils an einem dieser optischen Pfade (71, 72) angeordnet sind,
- der optische Sender (6) Signale einer Wellenlänge in einen Arm (22) des Richtkopplers (2) einkoppelt,
- diese Signale über den Richtkoppler (2) in das Mach-Zehnder-Interferometer (1) eingekoppelt und über den Eingangskoppler (13) dem Ein-/Ausgangswellenleiter (4) zugeführt werden, wobei sie in entgegengesetzter Richtung wie die Signale der ersten und zweiten Wellenlänge (λ1, λ2) verlaufen
**dadurch gekennzeichnet, dass**
- das Mach-Zehnder-Interferometer (1) und der Richtkoppler (2) derart miteinander verschachtelt sind, dass ein Arm (12) des Mach-Zehnder-Interferometers (1) gleichzeitig einer der Arme (21) des Richtkopplers (2) ist bzw. umgekehrt,
so dass die Signale in den Arm des Richtkopplers von dem optischen Sender eingekoppelt werden, der nicht gleichzeitig ein Arm des Mach-Zehnder-Interferometer ist, diese Signale im Richtkoppler in den gemeinsamen Arm (12, 21) mit dem Mach-Zehnder-Interferometer eingekoppelt und so in dem gemeinsamen Arm entgegengesetzter Richtung wie die Signale der ersten und Zweiten Wellenlänge verlaufen, wobei die Wellenlänge der Signale vom optischen Sender eine dritte Wellenlänge ist.

2. Sende-/Empfangsmodul nach Anspruch 1, **dadurch gekennzeichnet, dass** dem Richtkoppler (2) ein weiterer Richtkoppler (3) zugeordnet ist, dessen einer Arm (31) mit dem Richtkoppler (2) und dessen anderer Arm (32) mit dem optischen Sender (6) verbunden ist, wobei
a) vom optischen Sender (6) ausgesandte Strahlung in den mit dem Richtkoppler verbundenen Arm (31) des weiteren Richtkopplers (3) eingekoppelt wird und
b) in dem mit dem Richtkoppler verbundenen Arm (31) vorhandene Strahlung, die vom Mach-Zehnder-Interferometer (1) eingekoppelt ist, nicht in den mit dem optischen Sender verbundenen Arm (32) des weiteren Richtkopplers (3) eingekoppelt wird.

3. Sende-/Empfangsmodul nach Anspruch 2, **dadurch gekennzeichnet, dass** die beiden Arme (31', 32') des weiteren Richtkopplers (3') parallel verlaufend und gekrümmt ausgebildet sind.

4. Sende-/Empfangsmodul nach einem der Ansprüche 1 bis 3, **dadurch gekennzeichnet, dass** die erste Wellenlänge (λ1) im Bereich zwischen 1530 und 1570 nm, insbesondere bei 1550 nm, die zweite Wellenlänge (λ2) im Bereich zwischen 1470 und 1510 nm, insbesondere bei 1490 nm, und die dritte Wellenlänge (λ3) im Bereich zwischen 1250 und 1350 nm, insbesondere bei 1310 nm liegt.

5. Sende-/Empfangsmodul nach einem der Ansprüche 1 bis 4, **dadurch gekennzeichnet, dass** der eine Arm (12) des Mach-Zehnder-Interferometers (1) eine geringere Länge aufweist als der andere Arm (11) und der Arm (12) geringerer Länge gleichzeitig der eine Arm (21) des Richtkopplers (2) ist.

6. Sende-/Empfangsmodul nach einem der Ansprüche 1 bis 5, **dadurch gekennzeichnet, dass** der Arm (21) des Richtkopplers, der gleichzeitig ein Arm (12) des Mach-Zehnder-Interferometers ist, geradlinig verläuft.

7. Sende-/Empfangsmodul nach einem der Ansprüche 1 bis 6, **dadurch gekennzeichnet, dass** auf einen Arm (11) des Mach-Zehnder-Interferometers ein Phasenschieber (8) gelegt ist.

8. Sende-/Empfangsmodul nach einem der Ansprüche 1 bis 7, **dadurch gekennzeichnet, dass** die optische Anordnung von Mach-Zehnder-Interferometer (1) und Richtkoppler (2) integriert optisch ausgebildet ist.

## Claims

1. Transceiver module for a bidirectional optical data transmission for WDM systems having at least three wavelengths, comprising
- at least two detection devices (51, 52),
- at least one transmitter (6),
- an input/output waveguide (4) via which signals of at least two wavelengths are transmitted to the transceiver module, and signals of at least one wavelength are output by the transceiver module, and
- comprising at least one optical arrangement which has
o a Mach-Zehnder interferometer (1) with a first arm (11), a second arm (2), an input coupler (13) and an output coupler (14), and
o a directional coupler (2) with a first arm (21) and a second arm (22), wherein
- the input/output waveguide (4) is connected to the input coupler (13) of the Mach-Zehnder interferometer (1), the input signals of a first and a second wavelength (λ1, λ2) to be detected separately being present at the input coupler (13) and the input coupler (13) dividing the input signals in equal parts between the two arms of the Mach-Zehnder interferometer (1),
- the Mach-Zehnder interferometer (1) separates the signals of the first wavelength (λ1) and the signals of the second wavelength (λ2), the output coupler (14) puts the signals of the first wavelength (λ1) and the signals of the second wavelength (λ2) onto separate optical paths (71, 72), and the detection devices (51, 52) are respectively arranged on one of these optical paths (71, 72),
- the optical transmitter (6) couples signals of one wavelength into an arm (22) of the directional coupler (2), and
- these signals are coupled into the Mach-Zehnder interferometer (1) via the directional coupler (2) and are fed to the input/output waveguide (4) via the input coupler (13), in which case they run in a direction opposite to the signals of the first and second wavelengths (λ1, λ2), **characterized in that**
- the Mach-Zehnder interferometer (1) and the directional coupler (2) are interleaved with one another in such a way that an arm (12) of the Mach-Zehnder interferometer (1) is simultaneously one of the arms (21) of the directional coupler (2) and vice versa, such that the signals in the arm of the directional coupler are coupled in by the optical transmitter which is not simultaneously an arm of the Mach-Zehnder interferometer, and these signals are coupled in in the directional coupler into the common arm (12, 21) with the Mach-Zehnder interferometer, and thus run in the common arm in a direction opposite to the signals of the first and second wavelengths, the wavelength of the signals from the optical transmitter being a third wavelength.

2. Transceiver module according to Claim 1, **characterized in that** the directional coupler (2) is assigned a further directional coupler (3) of which one arm (31) is connected to the directional coupler (2) and whose other arm (32) is connected to the optical transmitter (6) wherein
a) radiation output by the optical transmitter (6) is coupled into the arm (31) connected to the directional coupler, of the further directional coupler (3), and
b) radiation which is present in the arm (31) connected to the directional coupler and is coupled in by the Mach-Zehnder interferometer (1) is not coupled into the arm (32) connected to the optical transmitter, of the further directional coupler (3).

3. Transceiver module according to Claim 2, **characterized in that** the two arms (31', 32') of the further directional coupler (3') run parallel and are of curved design.

4. Transceiver module according to one of Claims 1 to 3, **characterized in that** the first wavelength (λ1) is in the region between 1530 and 1570 nm, in particular at 1550 nm, the second wavelength (λ2) is in the region between 1470 and 1510 nm, in particular at 1490 nm, and the third wavelength (λ3) is in the region between 1250 and 1350 nm, in particular at 1310 nm.

5. Transceiver module according to one of Claims 1 to 4, **characterized in that** one arm (12) of the Mach-Zehnder interferometer (1) has a shorter length than the other arm (11), and the arm (12) of shorter length is simultaneously one arm (21) of the directional coupler (2).

6. Transceiver module according to one of Claims 1 to 5, **characterized in that** the arm (21) of the directional coupler which is simultaneously an arm (12) of the Mach-Zehnder interferometer runs rectilinearly.

7. Transceiver module according to one of Claims 1 to 6, **characterized in that** a phase shifter (8) is positioned on one arm (11) of the Mach-Zehnder interferometer.

8. Transceiver module according to one of Claims 1 to 7, **characterized in that** the optical arrangement of Mach-Zehnder interferometer (1) and directional coupler (2) is of optically integrated design.

## Revendications

1. Module émetteur/récepteur de transmission optique bidirectionnelle de données pour des systèmes WDM ayant au moins trois longueurs d'ondes comprenant
- au moins deux dispositifs (51, 52) de détection ;
- au moins un dispositif (6) d'émission ;
- un guide d'ondes (4) d'entrée/sortie, par lequel des signaux d'au moins deux longueurs d'ondes sont transmis au module émetteur/récepteur et des signaux d'au moins une longueur d'ondes sont émis par le module émetteur/récepteur ; et
- au moins un dispositif optique qui a
• un interféromètre (1) de Mach-Zehnder ayant un premier bras (11), un deuxième bras (12), un coupleur (13) d'entrée et un coupleur (14) de sortie ; et
• un coupleur (2) directionnel ayant un premier bras (21) et un deuxième bras (22), dans lequel
- le guide d'ondes (4) d'entrée/sortie est relié au coupleur (13) d'entrée de l'interféromètre (1) de Mach-Zehnder, les signaux d'entrée d'une première et d'une deuxième longueurs d'ondes (λ1, λ2) distinctes à détecter étant appliqués au coupleur (13) d'entrée et le coupleur (13) d'entrée répartissant les signaux d'entrée en parties égales sur les deux bras de l'interféromètre (1) de Mach-Zehnder ;
- l'interféromètre (1) de Mach-Zehnder répartit les signaux de la première longueur d'ondes (λ1) et les signaux de la deuxième longueur d'ondes (λ2), le coupleur (14) de sortie envoie les signaux de la première longueur d'ondes (λ1) et les signaux de la deuxième longueur d'ondes (λ2) sur des trajets (71, 72) optiques distincts et les dispositifs (51, 52) de détection sont montés, respectivement, sur l'un de ces trajets (71, 72) optiques ;
- l'émetteur (6) optique injecte des signaux d'une longueur d'ondes dans un bras (22) du coupleur (2) directionnel ;
- ces signaux sont injectés par le coupleur (2) directionnel dans l'interféromètre (1) de Mach-Zehnder et sont envoyés par le coupleur (13) d'entrée au guide d'ondes (4) d'entrée/sortie en passant dans le sens contraire aux signaux de la première et de la deuxième longueurs d'ondes (λ1, λ2),
**caractérisé en ce que**
- l'interféromètre (1) de Mach-Zehnder et le coupleur (2) directionnel sont imbriqués l'un avec l'autre de façon à ce qu'un bras (12) de l'interféromètre (1) de Mach-Zehnder est en même temps l'un des bras (21) du coupleur (2) directionnel ou inversement, de sorte que les signaux sont injectés dans le bras du coupleur directionnel par l'émetteur optique qui n'est pas en même temps un bras de l'interféromètre de Mach-Zehnder, ces signaux sont injectés dans le coupleur directionnel dans le bras (12, 21) commun avec l'interféromètre de Mach-Zehnder et ainsi passent dans le bras commun dans le sens contraire aux signaux des première et deuxième longueurs d'ondes, la longueur d'ondes des signaux de l'émetteur optique étant une troisième longueur d'ondes.

2. Module émetteur/récepteur suivant la revendication 1, **caractérisé en ce qu'**il est associé au coupleur (2) directionnel un autre coupleur (3) directionnel dont un bras (31) est relié au coupleur (2) directionnel et dont un autre bras (32) est relié à l'émetteur (6) optique dans lequel
a) du rayonnement émis par l'émetteur (6) optique est injecté dans le bras (31), relié au coupleur directionnel, de l'autre coupleur (3) directionnel ; et
b) du rayonnement, qui est présent dans le bras (31) relié au coupleur directionnel et qui est injecté par l'interféromètre (1) de Mach-Zehnder, n'est pas injecté dans le bras (32), relié à l'émetteur optique, de l'autre coupleur (3) directionnel.

3. Module émetteur/récepteur suivant la revendication 2, **caractérisé en ce que** les deux bras (31', 32') de l'autre coupleur (3') directionnel sont parallèles et courbés.

4. Module émetteur/récepteur suivant l'une des revendications 1 à 3, **caractérisé en ce que** la première longueur d'ondes (λ1) est comprise entre 1 530 et 1 570 nm, en étant notamment égale à 1 550 nm, la deuxième longueur d'ondes (λ2) est comprise entre 1 470 et 1 510 nm, en étant notamment égale à 1 490 nm et la troisième longueur d'ondes (λ3) est comprise entre 1 250 et 1 350 nm, en étant notamment égale à 1 310 nm.

5. Module émetteur/récepteur suivant l'une des revendications 1 à 4, **caractérisé en ce que** l'un des bras (12) de l'interféromètre de Mach-Zehnder a une longueur plus petite que l'autre bras (11) et le bras (12) de longueur plus petite est en même temps l'un des bras (21) du coupleur (2) directionnel.

6. Module émetteur/récepteur suivant l'une des revendications 1 à 5, **caractérisé en ce que** le bras (21) du coupleur directionnel, qui est en même temps un bras (12) de l'interféromètre de Mach-Zehnder, s'étend en ligne droite.

7. Module émetteur/récepteur suivant l'une des revendications 1 à 6, **caractérisé en ce que** sur un bras (11) de l'interféromètre de Mach-Zehnder est posé un déphaseur (8).

8. Module émetteur/récepteur suivant l'une des revendications 1 à 7, **caractérisé en ce que** le dispositif optique constitué de l'interféromètre (1) de Mach-Zehnder et du coupleur (2) directionnel est constitué de manière intégrée optiquement.
